# EUROPÄISCHE PATENTSCHRIFT

(11) **EP 3 766 759 B1**
(45) Veröffentlichungstag und Bekanntmachung des Hinweises auf die Patenterteilung: **19.04.2023**
(21) Anmeldenummer: 20184507.0
(22) Anmeldetag: 07.07.2020
(51) Int. Cl.: B62B 3/02, B62B 5/06

(54) **KLAPPWAGEN**
COLLAPSIBLE CART
CHARIOT PLIABLE

(30) Priorität: 15.07.2019 CN 201921103313 U
(43) Veröffentlichungstag der Anmeldung: 20.01.2021
(73) Patentinhaber: SAAME Tools (Shanghai) Import & Export Co., Ltd., Shanghai (CN)
(72) Erfinder: Min, Hang, Pudong New Area Shanghai 200120 (CN)
(74) Vertreter: Meinke, Jochen

(56) Entgegenhaltungen:
- CN-A- 106 394 631
- DE-U1-212015 000 307
- JP-A- 2017 081 436
- US-A1- 2012 235 386

## Beschreibung

Die Erfindung betrifft einen Klappwagen.

Klappwagen werden normalerweise für den Lastentransport verwendet und sind ein häufig verwendetes Hilfsmittel. Bei Nichtgebrauch nimmt ein Klappwagen viel Platz ein. Der Boden des Wagens hat Räder, die beim Stapeln sehr instabil sind und störend sind.

Bei bekannten Klappwagen können der Griff oder das Rad einiger Wagen geklappt werden, aber sowohl das Klappverfahren als auch die Struktur der Klappwagen sind nicht nur kompliziert, sondern auch die Stabilität des Klappwagens ist im ausgeklappten Zustand schlecht und instabil.

Ein Klappwagen mit den Merkmalen des Oberbegriffs des Patentanspruchs 1 ist aus US 2012/235386 A1 bekannt. Bei diesem Klappwagen können nur die Räder einer Achse gleichzeitig ein- oder ausgeschwenkt werden. Ein ähnlicher Klappwagen ist aus CN 106 394 631 A bekannt. Aus DE 21 2015 000 307 U1 ist ein Klappwagen bekannt, bei welchem die Räder beider Achsen gleichzeitig ein- oder ausgeschwenkt werden können. Dazu ist ein Zahnradgetriebe zwischen einem Schwenkgriff und einer Achse vorgesehen, wobei die Schwenkbewegung über eine Kopplungsstange auf die zweite Achse übertragen wird.

Aufgabe der Erfindung ist es, einen Klappwagen zu verbessern.

Diese Aufgabe wird mit einem Klappwagen mit den Merkmalen des Patentanspruchs 1 gelöst. Bevorzugte Ausführungsbeispiele sind in den abhängigen Ansprüchen definiert.

Die Erfindung schlägt somit einen Klappwagen vor, bei dem der Griff und die Räder gleichzeitig in einer Aktion ausgefahren oder eingeklappt werden können. Er hat nicht nur eine einfache Struktur und eine bequeme Bedienung, sondern auch eine hohe Stabilität im ausgeklappten Zustand, um die Mängel des aktuellen Standes der Technik abzustellen.

Ferner stellt die Erfindung einen Klappwagen bereit, bei dem, wenn sich die Antriebsstange um die Grundplatte dreht, die L-förmige Struktur das Ende des ersten rotierenden Teils verlässt, wobei sich das erste Federteil nach hinten erstreckt, um das erste rotierenden Teil vom ersten festen Teil wegzudrücken, währenddessen das erste Federteil zurückgesetzt und verdreht und das erste rotierende Teil um 90° gedreht wird, wodurch die erste Radbaugruppe, die am ersten rotierenden Teil befestigt ist, um 90° gedreht wird.

Ferner stellt die Erfindung einen Klappwagen bereit, bei dem, wenn sich die Antriebsstange umgekehrt um die Grundplatte dreht, das Ende der L-förmigen Struktur gegen das erste rotierende Teil drückt, um sich nahe an das erste feste Teil zu bewegen, wobei die geneigten Flächen des ersten rotierenden Teils die geneigten Flächen des ersten festen Teils berühren, wobei das erste Federteil in dieser Bewegung noch zusammengedrückt wird, währenddessen sich die geneigten Flächen des ersten rotierenden Teils weiter bis 90° entlang der geneigten Flächen des ersten festen Teils drehen, bis die geraden Flächen des ersten rotierenden Teils mit den geraden Flächen des ersten festen Teils ineinandergreifen, so dass die gesamte Oberfläche des ersten rotierenden Teils mit der gesamten Oberfläche des ersten festen Teils übereinstimmt, wobei sich das erste Federteil umgekehrt um 90° dreht, wobei die erste Radbaugruppe, die am ersten rotierenden Teil befestigt ist, sich umgekehrt um 90° dreht.

Der Klappwagen weist eine zweite Raddrehbaugruppe, eine zweite Radbaugruppe und eine Verbindungsstange auf, wobei die zweite Raddrehbaugruppe ein zweites Gleitteil, ein zweites rotierendes Teil und ein zweites Federteil aufweist, wobei das zweite Gleitteil hülsenförmig auf der horizontalen Stange angeordnet und auf der horizontalen Stange verschiebbar ist, wobei ein Ende des zweiten Gleitteils mehrere kreisförmig verteilte, verschachtelte Zahnspitzen und Zahntäler aufweist, wobei die Menge der Zahntäler nicht mehr als vier beträgt, wobei das zweite rotierende Teil an der horizontalen Stange befestigt ist, wobei ein Ende des zweiten rotierenden Teils mit der Endfläche des zweiten Gleitteils übereinstimmt und auch mehrere kreisförmig verteilte, verschachtelte Zahnspitzen und Zahntäler aufweist, wobei die Zahnspitze des zweiten rotierenden Teils in das Zahntal des zweiten Gleitteils eingeführt werden kann, wobei das Zahntal des zweiten rotierenden Teils die Zahnspitze des zweiten Gleitteils aufnehmen kann, wobei die beiden gegenüberliegenden Flächen des zweiten rotierenden Teils und des zweiten Gleitteils perfekt zusammenpassen, wobei das zweite Federteil der zweiten Radbaugruppe die horizontale Stange hülsenförmig umgibt, wobei ein Ende jeweils an der Grundplatte befestigt und das andere Ende jeweils mit der anderen Endfläche des zweiten Gleitteils verbunden ist, die das zweite Gleitteil antreibt, um sich zum zweiten rotierenden Teil zu bewegen, wobei die beiden Enden der Verbindungsstange jeweils am ersten rotierenden Teil und am zweiten rotierenden Teil befestigt sind, wobei die erste Radbaugruppe an einem Ende der Verbindungsstange befestigt ist, um die feste Verbindung mit dem ersten rotierenden Teil zu erreichen, wobei die zweite Radbaugruppe am anderen Ende der Verbindungsstange befestigt ist.

Ferner stellt die Erfindung einen Klappwagen bereit, bei dem das zweite Gleitteil ein Langloch aufweist, durch welches ein an der horizontalen Stange (310) befestigter Stift hindurchtritt, wodurch die Gleitverbindung zwischen dem zweiten Gleitteil und der horizontalen Stange erreicht wird.

Es wird ein Klappwagen bereitgestellt, bei dem sich das erste rotierende Teil vom ersten festen Teil wegbewegt und sich gleichzeitig dreht, wobei es die Verbindungsstange und das zweite rotierende Teil antreibt, das daran befestigt ist, wobei die Zahnspitze und das Zahntal zwischen dem zweiten rotierenden Teil und dem zweiten Gleitteil sich trennen und sich die an der Verbindungsstange befestigte zweite Radbaugruppe einklappt.

Es wird ein Klappwagen bereitgestellt, bei dem das erste rotierende Teil sich in die Nähe des ersten festen Teils bewegt und sich gleichzeitig umgekehrt dreht, wobei die Verbindungsstange und das zweite rotierende Teil, das daran befestigt ist, angetrieben werden, wobei die Zahnspitze des zweiten rotierenden Teils zuerst auf die Zahnspitze des zweiten Gleitteils trifft und das zweite Gleitteil gezwungen wird, sich zu bewegen, und das zweite Federteil zusammengedrückt wird, wobei das zweite rotierende Teil sich weiter dreht, wenn sich die Zahnspitze des zweiten rotierenden Teils zu einer relativen Position des Zahntals des zweiten Gleitteils dreht, wodurch die beiden Teile perfekt übereinstimmen, wobei das zweite Federteil eine Kraft auf das zweite Gleitteil ausübt und das zweite rotierende Teil und das zweite Gleitteil antreibt, um miteinander übereinzustimmen, wobei die Verbindungsstange sich um 90 Grad dreht und die daran befestigte zweite Radbaugruppe zum Ausklappen antreibt.

Ferner stellt die Erfindung einen Klappwagen bereit, bei dem die zwei vertikalen Stangen eines Griffs des Klappwagens die Antriebsstangen sind, wobei die Anzahl der horizontalen Stangen, der ersten Raddrehbaugruppe, der ersten Radbaugruppe, der zweiten Raddrehbaugruppe, der zweiten Radbaugruppe und der Verbindungsstange zwei beträgt, wobei jede der horizontalen Stangen, der ersten Raddrehbaugruppe, der ersten Radbaugruppe, der zweiten Raddrehbaugruppe und der zweiten Radbaugruppe und der Verbindungsstange sich auf jeder Seite der Grundplatte befindet, wobei die beiden horizontalen Stangen durch eine Verbindungsstange zu einer U-förmigen Führungsschiene verbunden sind.

Darüber hinaus stellt die Erfindung einen Klappwagen bereit, bei dem eine Griffverriegelungsbaugruppe vorgesehen ist, die eine Verriegelungsstange und zwei Verriegelungsfederteile aufweist, wobei die Rückseite der L-förmigen Struktur am Fußbereich der vertikalen Stange jeweils Verriegelungsschlitze aufweist, wobei zwei der Verriegelungsfederteile jeweils auf beiden Seiten der beiden vertikalen Stangen angeordnet sind, wobei ein Ende jeweils an einem Ende der Verriegelungsstange befestigt und das andere Ende jeweils auf der Grundplatte befestigt ist, wobei durch Ziehen der Verriegelungsstange aus dem Verriegelungsschlitz der Griff gedrückt und zur Grundplatte gedreht wird, wobei unter dem Druck des Verriegelungsfederteils die Verriegelungsstange mit der Unterseite der beiden vertikalen Stangen des Griffs übereinstimmt, wobei, wenn der Griff hochgezogen wird, sich die vertikale Stange in einen vertikalen Zustand zurückdreht und die Verriegelungsstange unter der Kraft des Verriegelungsfederteils in den Verriegelungsschlitz eingeführt wird.

Schließlich schlägt die Erfindung einen Klappwagen vor, bei dem die Grundplatte einen Grundplattenkörper und zwei Verbindungsplatten aufweist, wobei die beiden Verbindungsplatten auf beiden Seiten des Grundplattenkörpers befestigt sind, wobei jede der Verbindungsplatten zwei parallele Flächen quer zum Grundplattenkörper aufweist, wobei in der L-förmigen Struktur sich ein Führungsstangenschlitz befindet, wobei die beiden L-förmigen Strukturen jeweils in die beiden parallelen Flächen der beiden Verbindungsplatten eingesetzt werden, wobei ein Ende der beiden horizontalen Stangen in den Führungsstangenschlitz eingeführt und durch Verriegelungsstifte an der L-förmigen Struktur angelenkt ist.

Die Erfindung ist nachstehend anhand der Zeichnung beispielhaft näher erläutert. Diese zeigt in
- Fig. 1: eine perspektivische Ansicht eines Klappwagens in ausgeklapptem Zustand,
- Fig. 2: eine perspektivische Ansicht eines Klappwagens in eingeklapptem Zustand,
- Fig. 3: eine perspektivische Ansicht eines Klappwagens in ausgeklapptem Zustand nach Entfernen eines Grundplattenkörpers,
- Fig. 4: eine vergrößerte Ansicht Z1 in Fig. 3,
- Fig. 5: eine vergrößerte Ansicht Z2 in Fig. 3,
- Fig. 6: eine perspektivische Ansicht eines Klappwagens in eingeklapptem Zustand nach Entfernen des Grundplattenkörpers und des Griffs,
- Fig. 7: eine vergrößerte Ansicht D1 in Fig. 6,
- Fig. 8: eine vergrößerte Ansicht D2 in Fig. 6,
- Fig. 9: eine Explosionsansicht einer ersten Raddrehbaugruppe in eingeklapptem Zustand,
- Fig. 10: eine Explosionsansicht einer zweiten Raddrehbaugruppe in eingeklapptem Zustand,
- Fig. 11: eine perspektivische Ansicht eines Klappwagens in eingeklapptem Zustand nach Entfernen des Grundplattenkörpers und
- Fig. 12: eine vergrößerte Ansicht S in Fig. 11.

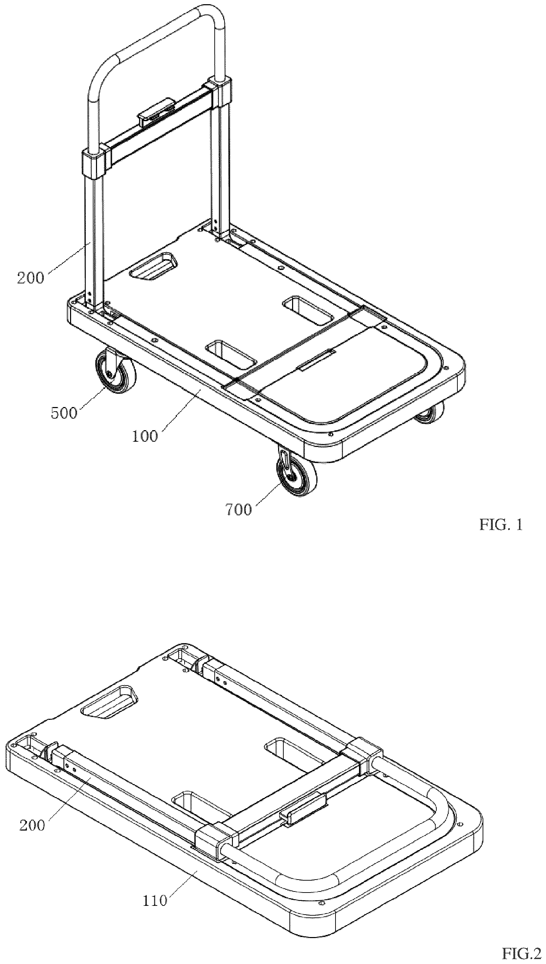

Bei der in den Fig. 1 bis 3 dargestellten Ausführungsform weist ein Klappwagen eine Grundplatte 100, einen Griff 200, eine U-förmige Führungsschiene 300, zwei Paare einer ersten Raddrehbaugruppe 400, zwei Paare einer ersten Radbaugruppe 500, zwei Paare einer zweiten Raddrehbaugruppe 600, zwei Paare einer zweiten Radbaugruppe 700 und zwei Verbindungsstangen 800 auf.

Bei dieser Ausführungsform sind zwei Paare der ersten Radbaugruppe 500 die Hinterräder, die jeweils an den beiden Seiten des Klappwagens angeordnet sind. Zwei Paare der zweiten Radbaugruppe 700 sind die Vorderräder, die jeweils an den beiden Seiten des Klappwagens angeordnet sind.

Nachfolgend wird nur eine der ersten Radbaugruppen 500 und eine der zweiten Radbaugruppen 700 auf derselben Seite des Klappwagens beschrieben. Die anderen der ersten Radbaugruppe 500 und der zweiten Radbaugruppe 700 sind symmetrisch zu der obigen, die sich in die entgegengesetzte Richtung dreht und die gleiche Struktur und das gleiche Klappprinzip aufweist, so dass sie nicht wiederholt erklärt werden.

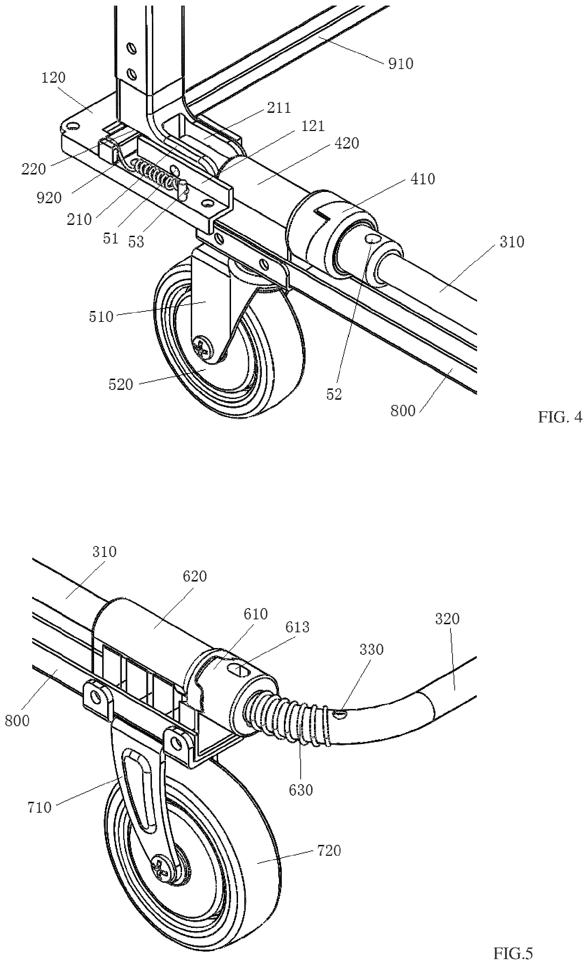

Wie in den Fig. 2 und 4 dargestellt, weist die Grundplatte 100 einen Grundplattenkörper 110 und zwei Verbindungsplatten 120 auf, wobei die zwei Verbindungsplatten 120 an zwei Seiten der Grundplatte 100 durch Befestigungselemente wie Schrauben und Muttern befestigt sind. Natürlich kann die Verbindungsplatte 120 auch in den Grundplattenkörper 110 integriert werden. Bei dieser Ausführungsform besteht die Grundplatte 100 aus einer Verbindungsplatte 120 und einem Grundplattenkörper 110, um der Herstellung der Grundplatte 100 zu vereinfachen. Wie in Fig. 4 dargestellt, hat die Verbindungsplatte 120 zwei parallele Flächen 121 quer bzw. vertikal zum Grundplattenkörper 110.

Der Griff 200 besteht aus zwei vertikalen Stangen und einer Querstange, was dem Griff eines herkömmlichen Wagens entspricht. Aber wie in Fig. 4 dargestellt, hat der Fußbereich der beiden vertikalen Stangen eine L-förmige Struktur 210. Die L-förmige Struktur 210 weist innen ein Führungsstangenschlitz 211 auf. Die zwei L-förmigen Strukturen 210 sind jeweils zwischen die zwei parallelen, vertikalen Flächen 121 der zwei Verbindungsplatten 120 eingeführt.

Zwei Seiten einer U-förmigen Führungsschiene 300 sind jeweils in den Führungsstangenschlitz 211 der L-förmigen Struktur 210 eingeführt. Ein Verriegelungsstift 51 tritt durch die zwei parallelen Flächen 121, die L-förmige Struktur 210 und die U-förmige Führungsschiene 300 und dient als Scharnierverbindung der vorgenannten drei Teile. Auf diese Weise wird die U-förmige Führungsschiene 300 und die Grundplatte 100 aneinander befestigt und außerdem wird auch eine drehbare Verbindung zwischen dem Griff 200, der Grundplatte 100 und der U-förmigen Führungsschiene 300 hergestellt.

Die U-förmige Führungsschiene 300 besteht aus zwei horizontalen Stangen 310 und einer Verbindungsstange 320. Ein Ende der zwei horizontalen Stangen 310, d.h. die zwei Enden der U-förmigen Führungsschiene 300, die in den Führungsstangenschlitz 211 eingesetzt sind, der Verriegelungsstift 51 und die L-förmige Struktur 210 sind scharnierverbunden, um eine drehbare Verbindung zwischen der U-förmigen Führungsschiene 300 und dem Griff 200 herzustellen. Der Verriegelungsstift 51 und die Verbindungsplatte 120 sind verbunden, um eine feste Verbindung der U-förmigen Führungsschiene 300 mit der Grundplatte 100 herzustellen. Eine Durchgangsbohrung 330 ist in der Verbindungsposition der horizontalen Stange 310 ausgespart. Die U-förmige Führungsschiene 300 ist durch eine Schraube mit Mutter mit dem Grundplattenkörper 110 verbunden.

Wie in den Fig. 4, 7 und 9 dargestellt, weist die erste Raddrehbaugruppe 400 ein erstes festes Teil 410, ein erstes rotierendes Teil 420 und ein erstes Federteil 430 auf.

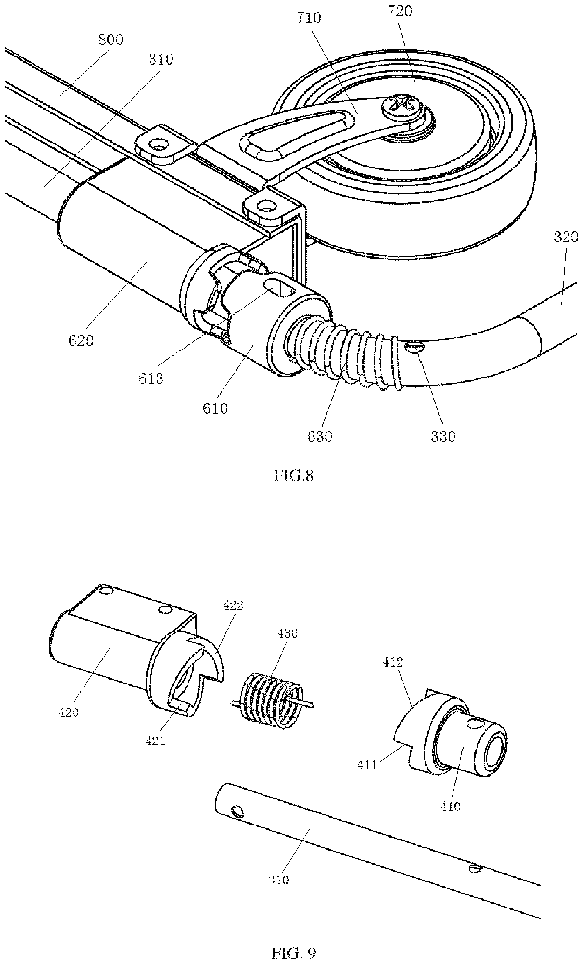

Das erste feste Teil 410 ist an der horizontalen Stange 310 der U-förmigen Führungsschiene 300 mit einer Hülse versehen und durch einen Verriegelungsstift 52 an der horizontalen Stange 310 der U-förmigen Führungsschiene 300 befestigt. Wie in Fig. 9 gezeigt, besteht bei dieser Ausführungsform das erste feste Teil 410 aus zwei Zylindern. Eine der Endflächen des ersten festen Teils 410 hat eine gerade Fläche 411, die gleichmäßig über den Umfang verteilt ist. Diese gerade Fläche 411 ist parallel zur horizontalen Stange 310. Zwei benachbarte gerade Flächen 411 sind mit einer geneigten Fläche 412 verbunden, natürlich sind auch die geneigten Flächen 412 gleichmäßig über den Umfang verteilt.

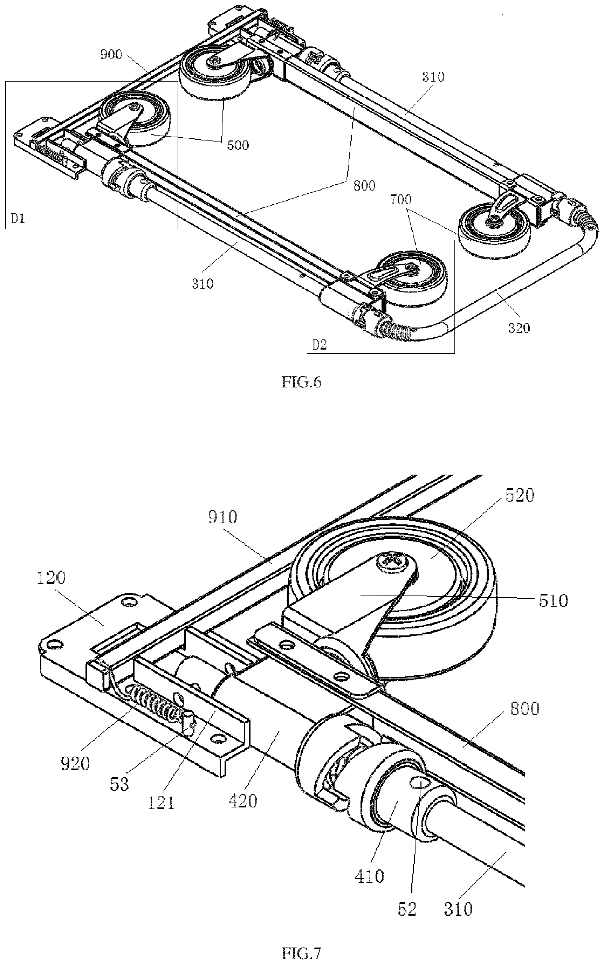

Wie in den Fig. 7 und 9 dargestellt, ist das erste rotierende Teil 420 an der horizontalen Stange 310 der U-förmigen Führungsschiene 300 mit einer Hülse versehen, wobei eine Seite davon an der Oberseite der L-förmigen Struktur 210 des Griffs 200 angebracht ist. Die andere Seite des ersten rotierenden Teils 420 weist ebenfalls mehrere gerade Flächen 421 und mehrere geneigte Flächen 422 auf. Die mehreren geraden Flächen 421 und die mehreren geneigten Flächen 422 des ersten rotierenden Teils 420 und die mehreren geraden Flächen 411 und die mehreren geneigten Flächen 412 des ersten festen Teils 410 sind aufeinander abgestimmt und passsitzgenau angelegt.

Das erste Federteil 430 ist zwischen dem ersten festen Teil 410 und dem ersten rotierenden Teil 420 angeordnet, wobei zwei Seiten des ersten Federteils 430 um 90° gedreht werden können (90° ist ein theoretischer Winkel, es wird einen bestimmten Rest- oder Toleranzwinkel geben, der den Winkel größer als 90° werden lässt), und es ist jeweils am ersten festen Teil 410 und am ersten rotierenden Teil 420 befestigt, d.h., dass eine Seite davon in den Umfang des ersten festen Teils 410 eingeführt wird, die andere Seite in den Umfang des ersten rotierenden Teils 420, der das erste Federteil 430 nicht nur mit Federkraft in Längsrichtung, sondern auch mit einem Drehmoment beaufschlagt.

Wie in den Fig. 5, 8 und 10 dargestellt, weist die zweite Raddrehbaugruppe 600 ein zweites Gleitteil 610, ein zweites rotierendes Teil 620 und ein zweites Federteil 630 auf.

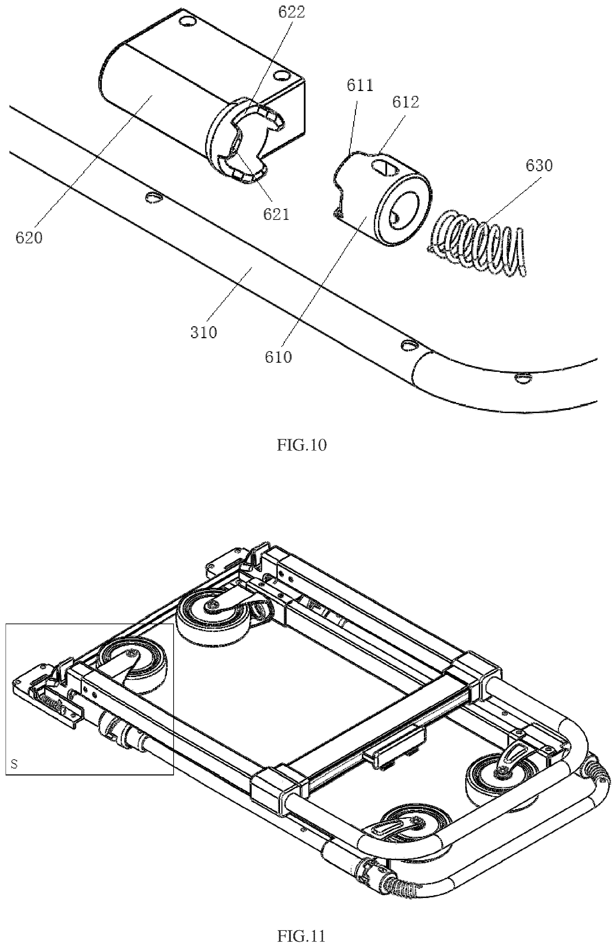

Das zweite Gleitteil 610 ist auf der horizontalen Stange 310 der U-förmigen Führungsschiene 300 hülsenförmig angeordnet. Es gibt ein Langloch 613 an dem zweiten Gleitteil 610:
Wenn ein Verriegelungsstift durch das Langloch 613 und die Durchgangsbohrung 330 der horizontalen Stange 310 hindurchtritt, kann das zweite Gleitteil 610 gleitend an der horizontalen Stange 310 der U-förmigen Führungsschiene 300 befestigt werden. Der Gleitbereich des zweiten Gleitteils 610 entspricht der Länge des Langlochs 613, das sich auf dem Verriegelungsstift bewegt. Wie in Fig. 10 dargestellt, hat eine Endfläche des zweiten Gleitteils 610 eine Zahnspitze 611 und ein Zahntal 612, die gleichmäßig über den Umfang verteilt sind, wobei Zahnradspitzen und Zahnradtäler aufeinander abgestimmt sind und perfekt ineinander verschachtelbar sind.

Das zweite rotierende Teil 620 ummantelt hülsenförmig die horizontale Stange 310 der U-förmigen Führungsschiene 300. Ein Ende des zweiten rotierenden Teils 620 stimmt mit der Endfläche des zweiten Gleitteils 610 überein und hat gleichmäßig verteilte Zahnspitzen 621 und Zahntäler 622 am Umfang. Die Zahnspitze 621 kann in das Zahntal 612 eingeführt werden, das Zahntal 622 kann in die Zahnspitze 611 eingeführt werden. Die gegenüberliegenden Flächen passen perfekt zusammen.

Das zweite Federteil 630 umgibt die horizontale Stange 310 der U-förmigen Führungsschiene 300 hülsenförmig, wobei ein Ende auf den Verriegelungsstift gedrückt wird, der an der Position der Durchgangsbohrung 330 liegt. Das andere Ende drückt auf die Endfläche des zweiten Gleitteils 610 und bewegt dieses gegen das zweite rotierende Teil 620. Ein Ende des zweiten Federteils 630 kann auch auf andere Weise, wie z.B. durch Schweißen, an der horizontalen Stange 310 der U-förmigen Führungsschiene 300 angebracht werden.

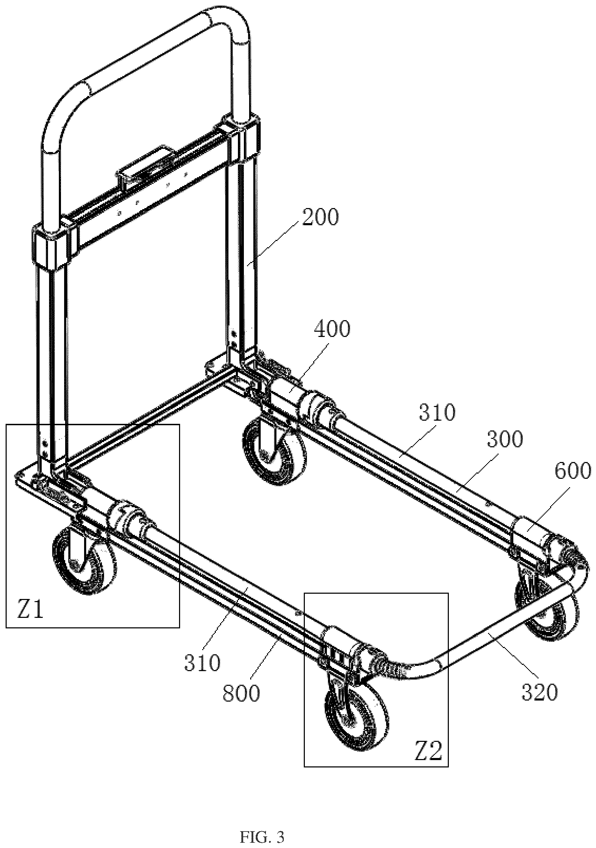

Wie in den Fig. 3 bis 5 gezeigt, passen die beiden Enden der Verbindungsstange 800 jeweils auf das erste rotierende Teil 420 und das zweite rotierende Teil 620. Die erste Radbaugruppe 500 weist einen ersten Radrahmen 510 und ein erstes Rad 520 auf. Der erste Radrahmen 510 ist an einem Ende der Verbindungsstange 800 befestigt, wodurch der erste Radrahmen 510 mit dem ersten rotierenden Teil 420 verbunden wird. Das erste Rad 520 ist mit dem ersten Radrahmen 510 durch einen Sicherungsstift verbunden und kann gedreht werden. Die zweite Radbaugruppe 700 weist einen zweiten Radrahmen 710 und ein zweites Rad 720 auf. Der zweite Radrahmen 710 ist an einem anderen Ende der Verbindungsstange 800 befestigt, wodurch der zweite Radrahmen 710 mit dem zweiten rotierenden Teil 620 verbunden wird. Das zweite Rad 720 ist mit dem zweiten Radrahmen 710 durch einen Sicherungsstift verbunden und kann gedreht werden.

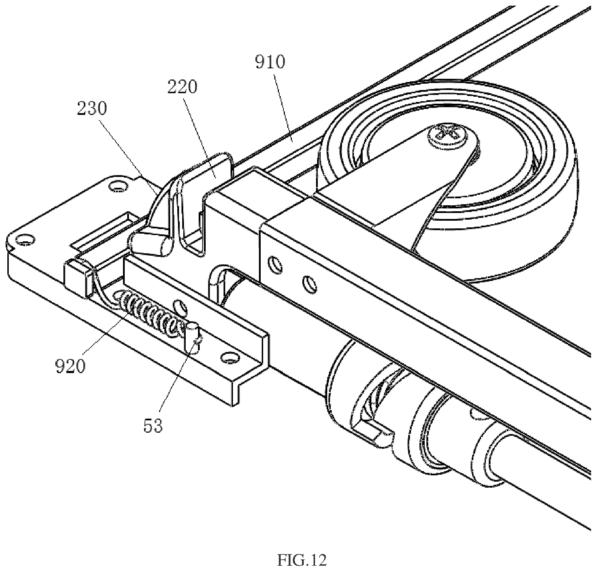

Wie in den Fig. 6 und 12 gezeigt, weist der Klappwagen in Ausgestaltung auch eine Griffverriegelungsbaugruppe 900 mit einer Verriegelungsstange 910 und zwei Verriegelungsfederteilen 920 auf.

Die Rückseite der L-förmigen Struktur 210 hat einen Verriegelungsschlitz 220. Auf der Unterseite der L-förmigen Struktur 210 befindet sich ein Kreisbogen 230.

Die Verriegelungsfederteile 920 sind jeweils an den beiden vertikalen Stangen angebracht, ein Ende ist jeweils an einem Ende der Verriegelungsstange 910 befestigt und das andere Ende ist an der Verbindungsplatte 120 durch einen Verriegelungsstift 53 an der Grundplatte 100 befestigt. Die Verriegelungsstange 910 kann in den Verriegelungsschlitz 220 eingeführt werden.

Funktionsbeschreibung des Klappwagens:
Wie in den Fig. 1, 3, 4 und 5 gezeigt, ist der Griff 200 bei Gebrauch des Klappwagens vertikal positioniert, wobei ein Ende der L-förmigen Struktur 210 auf ein Ende des ersten rotierenden Teils 420 der ersten Raddrehbaugruppe 400 drückt und das erste Federelement 430 zusammendrückt, wodurch die mehreren geraden Flächen 421 und die mehreren geneigten Flächen 422 vollständig verbunden sind mit den mehreren geraden Flächen 411 und den mehreren geneigten Flächen 412 des ersten festen Teils, wodurch die ersten Räder 520 der ersten Radbaugruppe 500 ausgeklappt werden.

Die Zahnspitze 621 und das Zahntal 622 des zweiten rotierenden Teils 620 sind vollständig mit dem Zahntal 612 und der Zahnspitze 611 verzahnt, wodurch das zweite Rad 720 der zweiten Radbaugruppe 700 ausgeklappt wird.

Wenn der Wagen eingeklappt werden soll, werden die Verriegelungsstangen 910 gezogen, wodurch die Verriegelungsstange 910 aus dem Verriegelungsschlitz 220 herausbewegt wird, dann wird der Griff 200 gedreht und auf die Grundplatte 100 gedrückt. Unter dem Druck des Verriegelungsfederteils 920 stimmt die Verriegelungsstange 910 mit der Unterseite der zwei vertikalen Stangen des Griffs 200 überein.

Die Radbaugruppe transformiert von der in Fig. 4 dargestellten Lage in die in Fig. 12 dargestellte Lage.

Der Zustand ändert sich wie in den Fig. 4 bis 7 gezeigt, die L-förmige Struktur 210 des Griffs 200 wird um den Verriegelungsstift 51 gedreht, wodurch der Griff 200 vollständig in die Grundplatte 100 eingepasst wird. Während dieses Vorgangs dreht sich das Ende der L-förmigen Struktur 210 und entspannt den Druck auf das erste rotierende Teil 420, wodurch das Zurücksetzen des ersten Federteils 430 ermöglicht wird, um das erste rotierende Teil 420 nach links zu bewegen und um 90° zu drehen. Das erste rotierende Teil 420 bewegt die Verbindungsstange 800, die sich gegen den Uhrzeigersinn dreht, wobei der erste Radrahmen 510 um 90° gedreht wird, wodurch das erste Rad 520 um 90° gedreht und unter die Grundplatte 100 geklappt wird.

In diesem Prozess ändert sich der Zustand, wie in den Fig. 5 bis 8 gezeigt, das erste rotierende Teil 420 bewegt sich nach links und dreht sich gegen den Uhrzeigersinn, wobei die Verbindungsstange 800 angetrieben wird, um sich in die gleiche Richtung zu bewegen, wodurch sich das zweite rotierende Teil 620, das an der Verbindungsstange 800 befestigt ist, ebenfalls nach links bewegt, während sie sich gegen den Uhrzeigersinn dreht. Die Zahnspitze und das Tal zwischen dem zweiten rotierenden Teil 620 und dem zweiten Gleitteil 610 werden getrennt und der an der Verbindungsstange 800 befestigte zweite Radrahmen 710 bewegt sich synchron nach links und dreht sich gegen den Uhrzeigersinn, um das zweite Rad 720 einzuklappen.

Wenn der Klappwagen ausgeklappt wird, zieht man den Griff 200 nach oben. Der Zustand ändert sich, wie in den Fig. 12 bis 4 gezeigt. Die vertikale Stange des Griffs 200 kehrt zur Vertikalen zurück. Der Fußbereich der vertikalen Stange dreht sich um den Verriegelungsstift 51. Die Verriegelungsstange 910 folgt dem Kreisbogen 230 und wird unter der Kraft des Verriegelungsfederteils 920 in den Verriegelungsschlitz 220 eingeführt.

Währenddessen drückt das Ende der L-förmigen Struktur 210 das erste rotierende Teil 420 nach rechts. Während des Zusammendrückens des ersten Federteils 430 nähert sich das erste rotierende Teil 420 allmählich dem ersten festen Teil 410. Wenn die geneigte Fläche 422 des ersten rotierenden Teils 420 sich an der geneigten Fläche 412 des ersten festen Teils 410 anlegt, ist das erste Federteil 430 noch unter Druck. Die geneigte Fläche 422 des ersten rotierenden Teils 420 folgt der geneigten Fläche 412 des ersten festen Teils 410, die sich im Uhrzeigersinn dreht, bis die gerade Fläche 421 des ersten rotierenden Teils 420 und die gerade Fläche 411 des ersten festen Teils 410 zusammenfallen, d.h., dass die Endfläche des ersten rotierenden Teils 420 und die Endfläche des ersten festen Teils 410 vollständig zusammenpassen. Zu diesem Zeitpunkt wird das erste Federteil 430 um 90° gedreht und der Zustand ändert sich wie in den Fig. 7 bis 4 gezeigt.

Währenddessen bewegt sich das erste rotierende Teil 420 nach rechts und dreht sich im Uhrzeigersinn, treibt die Verbindungsstange 800 an, die daran fixiert ist, um sich nach rechts zu bewegen und sich im Uhrzeigersinn zu drehen, wodurch das zweite rotierende Teil 620 angetrieben wird, das ebenfalls an der Verbindungsstange 800 befestigt ist, um sich nach rechts zu bewegen und im Uhrzeigersinn zu drehen. Der Zustand ändert sich, wie in den Fig. 8 bis 5 gezeigt. In diesem Prozess, wenn die Zahnspitze 621 des zweiten rotierenden Teils 620 zuerst auf die Zahnspitze 611 des zweiten Gleitteils 610 trifft, wird das zweite Gleitteil 610 gezwungen, sich nach rechts zu bewegen und das zweite Federteil 630 wird zusammengedrückt. Das zweite rotierende Teil 620 dreht sich weiter und die Zahnspitze 621 des zweiten rotierenden Teils 620 dreht sich zur relativen Position des Zahntals 612 des zweiten Gleitteils 610, bis die beiden Elemente perfekt zueinander passen. In diesem Prozess übt das zweite Federteil 630 eine nach links gerichtete Kraft auf das zweite Gleitteil 610 aus, um das zweite rotierende Teil 620 und das zweite Gleitteil 610 anzutreiben, um diese aneinander zu befestigen. Die Verbindungsstange 800 dreht sich um 90°, wobei der erste Radrahmen 510 und der zweite Radrahmen 710 um 90° gedreht werden, so dass sich das erste Rad 520 und das zweite Rad 720 um 90° im Uhrzeigersinn drehen und nach dem Ausklappen auf dem Boden rollen können.

In dieser Darstellung sind die Struktur der ersten Raddrehbaugruppe 400 und der zweiten Raddrehbaugruppe 600 unterschiedlich. Die zweite Raddrehbaugruppe 600 kann jedoch die Struktur der ersten Raddrehbaugruppe 400 annehmen, wodurch auch der gleiche technische Effekt erzielt werden kann. In der Tat ist die zweite Raddrehbaugruppe 600 darauf ausgerichtet, die Kraft der zweiten Radbaugruppe 700 auszugleichen und die Festigkeit der zweiten Radbaugruppe 700 zu verstärken. Grundsätzlich kann die erste Raddrehbaugruppe 400 auch die zweite Radbaugruppe 700 über die Verbindungsstange 800 drehen und aus- und einklappen.

Unter normalen Bedingungen hat der Klappwagen vier Vorder- und Hinterräder.

### Bezugszeichenliste:

- 100: Grundplatte
- 110: Grundplattenkörper
- 120: Verbindungsplatte
- 121: parallele Flächen
- 200: Griff
- 210: L-förmige Struktur
- 211: Führungsstangenschlitz
- 220: Verriegelungsschlitz
- 230: Kreisbogen
- 300: U-förmige Führungsschiene
- 310: horizontale Stange
- 320: Verbindungsstange
- 330: Durchgangsbohrung
- 400: erste Raddrehbaugruppe
- 410: erstes festes Teil
- 411: gerade Fläche des ersten festen Teils
- 412: geneigte Fläche des ersten festen Teils
- 420: erstes rotierendes Teil
- 421: gerade Fläche des ersten rotierenden Teils
- 422: geneigte Fläche des ersten rotierenden Teils
- 430: erstes Federteil
- 500: erste Radbaugruppe
- 510: erster Radrahmen
- 520: erstes Rad
- 600: zweite Raddrehbaugruppe
- 610: zweites Gleitteil
- 611: Zahnspitze des zweiten Gleitteils
- 612: Zahntal des zweiten Gleitteils
- 613: Langloch
- 620: zweites rotierendes Teil
- 621: Zahnspitze des zweiten rotierenden Teils
- 622: Zahntal des zweiten rotierenden Teils
- 630: zweites Federteil
- 700: zweite Radbaugruppe
- 710: zweiter Radrahmen
- 720: zweites Rad
- 800: Verbindungsstange
- 900: Griffverriegelungsbaugruppe
- 910: Verriegelungsstange
- 920: Verriegelungsfederteil

- 51: Verriegelungsstift
- 52: Verriegelungsstift
- 53: Verriegelungsstift

## Patentansprüche

1. Klappwagen mit einer Grundplatte (100), einer Antriebsstange, einer horizontalen Stange (310), einer ersten Raddrehbaugruppe (400) und einer ersten Radbaugruppe (500), wobei ein Ende der Antriebsstange gedreht werden kann, wobei die Verbindungsposition zwischen der Antriebsstange und der Grundplatte (100) eine L-förmige Struktur (210) aufweist, wobei die erste Raddrehbaugruppe (400) ein erstes festes Teil (410), ein erstes rotierendes Teil (420) und ein erstes Federteil (430) aufweist, wobei das erste feste Teil (410) mit einer Hülse versehen und an der horizontalen Stange (310) befestigt ist, wobei eine Endfläche des ersten festen Teils (410) mehrere gerade Flächen (411) aufweist, die gleichmäßig über den Umfang verteilt sind, wobei die Anzahl der geraden Flächen (411) nicht mehr als vier beträgt, wobei die geraden Flächen (411) parallel zur horizontalen Stange (310) verlaufen, wobei benachbarte gerade Flächen (411) durch eine geneigte Fläche (412) verbunden sind, wobei die geneigten Flächen (412) gleichmäßig am Umfang verteilt sind, wobei das erste rotierende Teil (420) über eine hülsenförmige Ummantelung an einem Ende mit der horizontalen Stange (310) verbunden und das andere Ende mit dem Ende der L-förmigen Struktur (210) verbunden ist, wobei das eine Ende des ersten rotierenden Teils (420) mehrere kreisförmig verteilte gerade Flächen (421) und geneigte Flächen (422) aufweist, wobei die geraden Flächen (421) und die geneigten Flächen (422) des ersten rotierenden Teils (420) mit den geraden Flächen (411) bzw. geneigten Flächen (412) des ersten festen Teils (410) übereinstimmen, wobei das erste Federteil (430) zwischen dem ersten festen Teil (410) und dem ersten rotierenden Teil (420) angeordnet ist, wobei, wenn das erste rotierende Teil (420) und das erste feste Teil (410) zusammenpassen, beide Enden des ersten Federteils (430) in einem festgelegten Winkel verdreht und am ersten festen Teil (410) bzw. am ersten rotierenden Teil (420) fixiert werden, wobei die erste Radbaugruppe (500) am ersten rotierenden Teil (420) befestigt ist und gemeinsam mit dem ersten rotierenden Teil (420) dreht,
**dadurch gekennzeichnet,**
**dass** ein Ende der Antriebsstange mit der Grundplatte (100) verbunden ist und dass die horizontale Stange (310) an der Grundplatte (100) befestigt ist, wobei eine zweite Raddrehbaugruppe (600), eine zweite Radbaugruppe (700) und eine Verbindungsstange (800) vorgesehen sind, wobei die zweite Raddrehbaugruppe (600) ein zweites Gleitteil (610), ein zweites rotierendes Teil (620) und ein zweites Federteil (630) aufweist, wobei das zweite Gleitteil (610) hülsenförmig auf der horizontalen Stange (310) angeordnet und auf der horizontalen Stange (310) verschiebbar ist, wobei ein Ende des zweiten Gleitteils (610) mehrere kreisförmig verteilte, verschachtelte Zahnspitzen (611) und Zahntäler (612) aufweist, wobei die Menge der Zahntäler (612) nicht mehr als vier beträgt, wobei das zweite rotierende Teil (620) an der horizontalen Stange (310) befestigt ist, wobei ein Ende des zweiten rotierenden Teils (620) mit der Endfläche des zweiten Gleitteils (610) übereinstimmt und auch mehrere kreisförmig verteilte, verschachtelte Zahnspitzen (621) und Zahntäler (622) aufweist, wobei die Zahnspitze (621) des zweiten rotierenden Teils (620) in das Zahntal (612) des zweiten Gleitteils (610) eingeführt werden kann, wobei das Zahntal (622) des zweiten rotierenden Teils (620) die Zahnspitze (611) des zweiten Gleitteils (610) aufnehmen kann, wobei die beiden gegenüberliegenden Flächen des zweiten rotierenden Teils (620) und des zweiten Gleitteils (610) perfekt zusammenpassen, wobei das zweite Federteil (630) der zweiten Radbaugruppe (700) die horizontale Stange (310) hülsenförmig umgibt, wobei ein Ende jeweils an der Grundplatte (100) befestigt und das andere Ende jeweils mit der anderen Endfläche des zweiten Gleitteils (610) verbunden ist, die das zweite Gleitteil (610) antreibt, um sich zum zweiten rotierenden Teil (620) zu bewegen, wobei die beiden Enden der Verbindungsstange (800) jeweils am ersten rotierenden Teil (420) und am zweiten rotierenden Teil (620) befestigt sind, wobei die erste Radbaugruppe (500) an einem Ende der Verbindungsstange (800) befestigt ist, um die feste Verbindung mit dem ersten rotierenden Teil (420) zu erreichen, wobei die zweite Radbaugruppe (700) am anderen Ende der Verbindungsstange (800) befestigt ist.

2. Klappwagen nach Anspruch 1,
**dadurch gekennzeichnet,**
**dass** sich die Antriebsstange um die Grundplatte (100) dreht, die L-förmige Struktur (210) das Ende des ersten rotierenden Teils (420) verlässt, wobei sich das erste Federteil (430) nach hinten erstreckt, um das erste rotierende Teil (420) vom ersten festen Teil (410) wegzudrücken, währenddessen das erste Federteil (430) zurückgesetzt und verdreht und das erste rotierende Teil (420) um 90° gedreht wird, wodurch die erste Radbaugruppe (500), die am ersten rotierenden Teil (420) befestigt ist, um 90° gedreht wird.

3. Klappwagen nach Anspruch 1,
**dadurch gekennzeichnet,**
**dass** sich die Antriebsstange umgekehrt um die Grundplatte (100) dreht, das Ende der L-förmigen Struktur (210) gegen das erste rotierende Teil (420) drückt, um sich nahe an das erste feste Teil (410) zu bewegen, wobei die geneigten Flächen (422) des ersten rotierenden Teils (420) die geneigten Flächen (412) des ersten festen Teils (410) berühren, wobei das erste Federteil (430) in dieser Bewegung noch zusammengedrückt wird, währenddessen sich die geneigten Flächen (422) des ersten rotierenden Teils (420) weiter bis 90° entlang der geneigten Flächen (412) des ersten festen Teils (410) drehen, bis die geraden Flächen (411) des ersten rotierenden Teils (420) mit den geraden Flächen (411) des ersten festen Teils (410) ineinandergreifen, so dass die gesamte Oberfläche des ersten rotierenden Teils (420) mit der gesamten Oberfläche des ersten festen Teils (410) übereinstimmt, wobei sich das erste Federteil (430) umgekehrt um 90° dreht, wobei die erste Radbaugruppe (500), die am ersten rotierenden Teil (420) befestigt ist, sich umgekehrt um 90° dreht.

4. Klappwagen nach Anspruch 1,
**dadurch gekennzeichnet,**
**dass** das zweite Gleitteil (610) ein Langloch (613) aufweist, durch welches ein an der horizontalen Stange (310) befestigter Stift hindurchtritt, wodurch die Gleitverbindung zwischen dem zweiten Gleitteil (610) und der horizontalen Stange (310) erreicht wird.

5. Klappwagen nach Anspruch 1,
**dadurch gekennzeichnet,**
**dass** die zwei vertikalen Stangen eines Griffs (200) des Klappwagens die Antriebsstangen sind, wobei die Anzahl der horizontalen Stangen (310), der ersten Raddrehbaugruppe (400), der ersten Radbaugruppe (500), der zweiten Raddrehbaugruppe (600), der zweiten Radbaugruppe (700) und der Verbindungsstange (800) zwei beträgt, wobei jede der horizontalen Stangen (310), der ersten Raddrehbaugruppe (400), der ersten Radbaugruppe (500), der zweiten Raddrehbaugruppe (600) und der zweiten Radbaugruppe (700) und der Verbindungsstange (800) sich auf jeder Seite der Grundplatte (100) befindet, wobei die beiden horizontalen Stangen (310) durch eine Verbindungsstange (320) zu einer U-förmigen Führungsschiene (300) verbunden sind.

6. Klappwagen nach Anspruch 1,
**dadurch gekennzeichnet,**
**dass** eine Griffverriegelungsbaugruppe (900) vorgesehen ist, die eine Verriegelungsstange (910) und zwei Verriegelungsfederteile (920) aufweist, wobei die Rückseite der L-förmigen Struktur (210) am Fußbereich der vertikalen Stange jeweils Verriegelungsschlitze (220) aufweist, wobei zwei der Verriegelungsfederteile (920) jeweils auf beiden Seiten der beiden vertikalen Stangen angeordnet sind, wobei ein Ende jeweils an einem Ende der Verriegelungsstange befestigt und das andere Ende jeweils auf der Grundplatte (100) befestigt ist, wobei durch Ziehen der Verriegelungsstange (910) aus dem Verriegelungsschlitz (220) der Griff (200) gedrückt und zur Grundplatte (100) gedreht wird, wobei unter dem Druck des Verriegelungsfederteils (920) die Verriegelungsstange (910) mit der Unterseite der beiden vertikalen Stangen des Griffs (200) übereinstimmt, wobei, wenn der Griff (200) hochgezogen wird, sich die vertikale Stange in einen vertikalen Zustand zurückdreht und die Verriegelungsstange (910) unter der Kraft des Verriegelungsfederteils (920) in den Verriegelungsschlitz (220) eingeführt wird.

7. Klappwagen nach Anspruch 1,
**dadurch gekennzeichnet,**
**dass** die Grundplatte (100) einen Grundplattenkörper (110) und zwei Verbindungsplatten (120) aufweist, wobei die beiden Verbindungsplatten (120) auf beiden Seiten des Grundplattenkörpers (110) befestigt sind, wobei jede der Verbindungsplatten (120) zwei parallele Flächen (121) quer zum Grundplattenkörper (110) aufweist, wobei in der L-förmigen Struktur (210) sich ein Führungsstangenschlitz (211) befindet, wobei die beiden L-förmigen Strukturen (210) jeweils zwischen die beiden parallelen Flächen (121) der beiden Verbindungsplatten (120) eingesetzt werden, wobei ein Ende der beiden horizontalen Stangen (310) in den Führungsstangenschlitz (211) eingeführt und durch Verriegelungsstifte (51) an der L-förmigen Struktur (210) angelenkt ist.

## Claims

1. Collapsible cart comprising a base plate (100), a drive rod, a horizontal rod (310), a first wheel rotating assembly (400) and a first wheel assembly (500), wherein one end of the drive rod can be rotated, the connection position between the drive rod and the base plate (100) having an L-shaped structure (210), the first wheel rotating assembly (400) having a first fixed part (410), a first rotating part (420) and a first spring part (430), the first fixed part (410) being provided with a sleeve and being attached to the horizontal rod (310), wherein an end face of the
first fixed part (410) has a plurality of straight faces (411) evenly distributed around the circumference, the number of straight faces (411) being not more than four, the straight faces (411) extending parallel to the horizontal rod (310), adjacent straight faces (411) being connected by an inclined face (412), the inclined faces (412) being evenly distributed around the circumference, the first rotating part (420) being connected to the horizontal rod (310) via a sleeve-like sheath at one end and the other end being connected to the end of the L-shaped structure (210), the one end of the first rotating part (420) having a plurality of straight faces (421) and inclined faces (422) distributed in a circle, the straight faces (421) and the inclined faces (422) of the first rotating part (420) matching the straight faces (411) and the inclined faces (412), respectively, of the first fixed part (410), the first spring part (430) being arranged between the first fixed part (410) and the first rotating part (420), wherein, when the first rotating part (420) and the first fixed part (410) fit together, the two ends of the first spring part (430) are twisted at a specified angle and attached to the first fixed part (410) and the first rotating part (420), respectively, wherein the first wheel assembly (500) being attached to the first rotating part (420) and rotating together with the first rotating part (420),
**characterised in that**
one end of the drive rod is connected to the base plate (100) and **in that** the horizontal rod (310) is attached to the base plate (100), wherein a second wheel rotating assembly (600), a second wheel assembly (700) and a connecting rod (800) are provided, the second wheel rotating assembly (600) having a second sliding part (610), a second rotating part (620) and a second spring part (630), the second sliding part (610) being arranged in a sleeve-like manner on the horizontal rod (310) and being slidable on the horizontal rod (310), one end of the second sliding part (610) having a plurality of circularly distributed interleaved tooth peaks (611) and tooth troughs (612), the quantity of the tooth troughs (612) being not more than four, the second rotating part (620) being attached to the horizontal rod (310), one end of the second rotating part (620) matching the end face of the second sliding part (610) and also having a plurality of circularly distributed interleaved tooth peaks (621) and tooth troughs (622), wherein the tooth peak (621) of the second rotating part (620) can be inserted into the tooth trough (612) of the second sliding part (610), wherein the tooth trough (622) of the second rotating part (620) can receive the tooth peak (611) of the second sliding part (610), wherein the two opposing faces of the second rotating part (620) and the second sliding part (610) fit together perfectly, the second spring part (630) of the second wheel assembly (700) surrounding the horizontal rod (310) in a sleeve-like manner, one end being fixed to the base plate (100) and the other end being connected to the other end face of the second sliding part (610), which drives the second sliding part (610) to move towards the second rotating part (620), the two ends of the connecting rod (800) being attached respectively to the first rotating part (420) and the second rotating part (620), the first wheel assembly (500) being attached to one end of the connecting rod (800) to achieve the fixed connection with the first rotating part (420), the second wheel assembly (700) being attached to the other end of the connecting rod (800).

2. Collapsible cart according to claim 1,
**characterised in that**
the drive rod rotates about the base plate (100), the L-shaped structure (210) leaves the end of the first rotating part (420), the first spring part (430) extending rearwardly to press the first rotating part (420) away from the first fixed part (410), whilst the first spring part (430) is reset and twisted and the first rotating part (420) is rotated through 90°, whereby the first wheel assembly (500) attached to the first rotating part (420) is rotated through 90°.

3. Collapsible cart according to claim 1,
**characterised in that**
the drive rod rotates in reverse about the base plate (100), the end of the L-shaped structure (210) presses against the first rotating part (420) in order to move close to the first fixed part (410), the inclined faces (422) of the first rotating part (420) contacting the inclined faces (412) of the first fixed part (410), wherein in this movement the first spring part (430) is still compressed, whilst the inclined faces (422) of the first rotating part (420) continue to rotate up to 90° along the inclined faces (412) of the first fixed part (410), until the straight faces (411) of the first rotating part (420) mesh with the straight faces (411) of the first fixed part (410) so that the entire surface of the first rotating part (420) matches the entire surface of the first fixed part (410), wherein the first spring part (430) rotates 90° in reverse, the first wheel assembly (500) attached to the first rotating part (420) rotating 90° in reverse.

4. Collapsible cart according to claim 1,
**characterised in that**
the second sliding part (610) has an elongated hole (613) through which a pin attached to the horizontal rod (310) passes, whereby sliding connection between the second sliding part (610) and the horizontal rod (310) is achieved.

5. Collapsible cart according to claim 1,
**characterised in that**
the two vertical rods of a handle (200) of the collapsible cart are the drive rods, the number of horizontal rods (310), the first wheel rotating assembly (400), the first wheel assembly (500), the second wheel rotating assembly (600), the second wheel assembly (700) and the connecting rod (800) being two, each of the horizontal rods (310), the first wheel rotating assembly (400), the first wheel assembly (500), the second wheel rotating assembly (600) and the second wheel assembly (700) and the connecting rod (800) being located on each side of the base plate (100), the two horizontal rods (310) being connected by a connecting rod (320) to form a U-shaped guide rail (300).

6. Collapsible cart according to claim 1,
**characterised in that**
a handle lock assembly (900) is provided comprising a locking rod (910) and two locking spring parts (920), the back of the L-shaped structure (210) having at the foot region of the vertical rod respective locking slots (220), two of the locking spring parts (920) being arranged on either side of the two vertical rods, one end being attached to one end of the locking rod and the other end being attached to the base plate (100), wherein by pulling the locking rod (910) out of the locking slot (220) the handle (200) is pressed and rotated towards the base plate (100), wherein under the pressure of the locking spring part (920) the locking rod (910) is matched with the underside of the two vertical rods of the handle (200), wherein, when the handle (200) is pulled up, the vertical rod rotates back to a vertical state and the locking rod (910) is inserted into the locking slot (220) under the force of the locking spring part (920).

7. Collapsible cart according to claim 1,
**characterised in that**
the base plate (100) has a base plate body (110) and two connecting plates (120), the two connecting plates (120) being attached on both sides of the base plate body (110), each of the connecting plates (120) having two parallel faces (121) transverse to the base plate body (110), a guide rod slot (211) being provided in the L-shaped structure (210), the two L-shaped structures (210) being inserted between the two parallel faces (121) of the two connecting plates (120), one end of the two horizontal rods (310) being inserted into the guide rod slot (211) and hinged to the L-shaped structure (210) by locking pins (51).

## Revendications

1. Chariot pliable muni d'une plaque de base (100), d'une barre d'entraînement, d'une barre horizontale (310), d'un premier ensemble de rotation de roue (400) et d'un premier ensemble de roue (500), dans lequel une extrémité de la barre d'entraînement peut être mis en rotation, dans lequel la position de liaison entre la barre d'entraînement et la plaque de base (100) présente une structure en forme de L (210), dans lequel le premier ensemble de rotation de roue (400) présente une première partie fixe (410), une première partie rotative (420) et une première partie formant ressort (430), dans lequel la première partie fixe (410) est pourvue d'un manchon et est montée sur la barre horizontale (310), dans lequel une surface d'extrémité de
la première partie fixe (410) présente une pluralité de surfaces droites (411), qui sont réparties uniformément sur le périmètre, dans lequel le nombre de surfaces droites (411) ne dépasse pas quatre, dans lequel les surfaces droites (411) s'étendent parallèlement à la barre horizontale (310), dans lequel les surfaces droites (411) adjacentes sont reliées par une surface inclinée (412), dans lequel les surfaces inclinées (412) sont réparties uniformément sur le périmètre, dans lequel la première partie rotative (420) est reliée par l'intermédiaire d'une gaine en forme de manchon au niveau d'une extrémité avec la barre horizontale (310) et l'autre extrémité avec l'extrémité de la structure en forme de L (210), dans lequel l'une des extrémités de la première partie rotative (420) présente une pluralité de surfaces droites (421) et surfaces inclinées (422) réparties en cercle, dans lequel les surfaces droites (421) et les surfaces inclinées (422) de la première partie rotative (420) correspondent aux surfaces droites (411) ou aux surfaces inclinées (412) de la première partie fixe (410), dans lequel la première partie formant ressort (430) est disposée entre la première partie fixe (410) et la première partie rotative (420), dans lequel, lorsque la première partie rotative (420) et la première partie fixe (410) vont de pair, les deux extrémités de la première partie formant ressort (430) sont déformées à un angle déterminé et fixées au niveau de la première partie fixe (410) ou au niveau de la première partie rotative (420), dans lequel le premier ensemble de roue (500) est monté sur la première partie rotative (420) et tourne conjointement avec la première partie rotative (420),
**caractérisé en ce que**
une extrémité de la barre d'entraînement est reliée à la plaque de base (100) et **en ce que** la barre horizontale (310) est montée sur la plaque de base (100), dans lequel sont prévus un second ensemble de rotation de roue (600), un second ensemble de roue (700) et une barre de liaison (800), dans lequel le second ensemble de rotation de roue (600) présente une seconde partie coulissante (610), une seconde partie rotative (620) et une seconde partie formant ressort (630), dans lequel la seconde partie coulissante (610) est disposée en forme de manchon sur la barre horizontale (310) et peut être déplacée sur la barre horizontale (310), dans lequel une extrémité de la seconde partie coulissante (610) présente une pluralité de pointes de dents (611) et de creux de dents (612) imbriqués, répartis en cercle, dans lequel la quantité de creux de dents (612) ne dépasse pas quatre, dans lequel la seconde partie rotative (620) est montée sur la barre horizontale (310), dans lequel une extrémité de la seconde partie rotative (620) correspond à la surface d'extrémité de la seconde partie coulissante (610) et présente également une pluralité de pointes de dents (621) et de creux de dents (622) imbriqués, répartis en cercle, dans lequel la pointe de dent (621) de la seconde partie rotative (620) peut être introduite dans le creux de dent (612) de la seconde partie coulissante (610), dans lequel le creux de dent (622) de la seconde partie rotative (620) peut recevoir la pointe de dent (611) de la seconde partie coulissante (610), dans lequel les deux surfaces opposées de la seconde partie rotative (620) et de la seconde partie coulissante (610) vont parfaitement de pair, dans lequel la seconde partie formant ressort (630) du second ensemble de roue (700) entoure la barre horizontale (310) en forme de manchon, dans lequel une extrémité est montée respectivement sur la plaque de base (100) et l'autre extrémité est reliée respectivement à l'autre surface d'extrémité de la seconde partie coulissante (610), qui entraîne la seconde partie coulissante (610), pour se déplacer vers la seconde partie rotative (620), dans lequel les deux extrémités de la barre de liaison (800) sont montées respectivement sur la première partie rotative (420) et sur la seconde partie rotative (620), dans lequel le premier ensemble de roue (500) est monté sur une extrémité de la barre de liaison (800), pour obtenir la liaison fixe avec la première partie rotative (420), dans lequel le second ensemble de roue (700) est monté sur l'autre extrémité de la barre de liaison (800).

2. Chariot pliable selon la revendication 1,
**caractérisé en ce que**
la barre d'entraînement tourne autour de la plaque de base (100), la structure en forme de L (210) sort de l'extrémité de la première partie rotative (420), dans lequel la première partie formant ressort (430) s'étend vers l'arrière, pour repousser la première partie rotative (420) de la première partie fixe (410), tandis que la première partie formant ressort (430) est réinitialisée et déformée et la première partie rotative (420) est mise en rotation à 90°, moyennant quoi le premier ensemble de roue (500), qui est monté sur la première partie rotative (420) est mis en rotation à 90°.

3. Chariot pliable selon la revendication 1,
**caractérisé en ce que**
la barre d'entraînement tourne en sens inverse autour de la plaque de base (100), l'extrémité de la structure en forme de L (210) appuie contre la première partie rotative (420), pour se déplacer à proximité de la première partie fixe (410), dans lequel les surfaces inclinées (422) de la première partie rotative (420) touchent les surfaces inclinées (412) de la première partie fixe (410), dans lequel la première partie formant ressort (430) est encore comprimée lors dudit mouvement, tandis que les surfaces inclinées (422) de la première partie rotative (420) continuent à tourner à 90° le long des surfes inclinées (412) de la première partie fixe (410), jusqu'à ce que les surfaces droites (411) de la première partie rotative (420) s'imbriquent dans les surfaces droites (411) de la première partie fixe (410), de sorte que la surface totale de la première partie rotative (420) corresponde à la surface totale de la première partie fixe (410), dans lequel la première partie formant ressort (430) tourne en sens inverse à 90°, dans lequel le premier ensemble de roue (500), qui est monté sur la première partie rotative (420), tourne en sens inverse à 90°.

4. Chariot pliable selon la revendication 1,
**caractérisé en ce que**
la seconde partie coulissante (610) présente un trou oblong (613), à travers lequel passe une goupille fixée à la barre horizontale (310), moyennant quoi la liaison coulissante est obtenue entre la seconde partie coulissante (610) et la barre horizontale (310).

5. Chariot pliable selon la revendication 1,
**caractérisé en ce que**
les deux barres verticales d'une poignée (200) du chariot pliable sont des barres d'entraînement, dans lequel le nombre de barres horizontales (310), de l'ensemble de rotation de roue (400), du premier ensemble de roue (500), du second ensemble de rotation de roue (600), du second ensemble de roue (700) et de la barre de liaison (800) s'élève à deux, dans lequel chacune des barres horizontales (310), du premier ensemble de rotation de roue (400), du premier ensemble de roue (500), du second ensemble de rotation de roue (600) et du second ensemble de roue (700) et de la barre de liaison (800) se trouve sur chaque côté de la plaque de base (100), dans lequel les deux barres horizontales (310) sont reliées par une barre de liaison (320) pour former un rail de guidage en forme de U (300).

6. Chariot pliable selon la revendication 1,
**caractérisé en ce que**
un ensemble de verrouillage de poignée (900) est prévu, qui présente une barre de verrouillage (910) et deux parties formant ressort de verrouillage (920), dans lequel le côté arrière de la structure en forme de L (210) présente respectivement au niveau des pieds de la barre verticale des fentes de verrouillage (220), dans lequel deux des parties formant ressort de verrouillage (920) sont disposées respectivement sur les deux côtés des deux barres verticales, dans lequel une extrémité est montée respectivement sur l'une des extrémités de la barre de verrouillage et l'autre extrémité est montée respectivement sur la plaque de base (100), dans lequel en tirant la barre de verrouillage (910) hors de la fente de verrouillage (220) la poignée (200) est poussée et tournée vers la plaque de base (100), dans lequel sous la pression de la partie formant ressort de verrouillage (920) la barre de verrouillage (910) correspond au côté inférieur des deux barres verticales de la poignée (200), dans lequel, lorsque la poignée (200) est relevée, la barre verticale retourne dans un état vertical et la barre de verrouillage (910) est introduit sous la force de la partie formant ressort de verrouillage (920) dans la fente de verrouillage (220).

7. Chariot pliable selon la revendication 1,
**caractérisé en ce que**
la plaque de base (100) présente un corps de plaque de base (110) et deux plaques de liaison (120), dans lequel les deux plaques de liaison (120) sont montées sur les deux côtés du corps de plaque de base (110), dans lequel chacune des plaques de liaison (120) présente deux surfaces parallèles (121) transversales au corps de plaque de base (110), dans lequel dans la structure en forme de L (210) se trouve une fente de barre de guidage (211), dans lequel les deux structures en forme de L (210) sont insérées respectivement entre les deux surfaces parallèles (121) des deux plaques de liaison (120), dans lequel une extrémité des deux barres horizontales (310) est introduite dans la fente de barre de guidage (211) et est articulée par des goupilles de verrouillage (51) sur la structure en forme de L (210).
